# FASCICULE DE BREVET EUROPEEN

(11) **EP 2 194 631 B1**
(45) Date de publication et mention de la délivrance du brevet: **20.05.2020**
(21) Numéro de dépôt: 09174168.6
(22) Date de dépôt: 27.10.2009
(51) Int. Cl.: H02K 3/50

(54) **Stator de machine électrique tournante, notamment d'un alternateur**
Stator einer rotierenden elektrischen Maschine, insbesondere einer Lichtmaschine
Stator of a rotating electric machine, especially of an alternator

(30) Priorité: 03.12.2008 FR 0858245
(43) Date de publication de la demande: 09.06.2010
(73) Titulaire: Valeo Equipements Electriques Moteur, 94046 Créteil Cedex (FR)
(72) Inventeur: Dunesme, Xavier, 91330 Yerres (FR); Loret, Benjamin, 92500 Rueil Malmaison (FR); Petrez, Aurélien, 94320 Thiais (FR)
(74) Mandataire: de Lambilly Delorme, Marie Pierre

(56) Documents cités:
- WO-A-2004/008610
- FR-A- 2 780 828
- US-A- 3 984 712
- US-A- 5 508 571

## Description

L'invention concerne notamment un stator de machine électrique tournante, notamment d'un alternateur.

On connaît par la demande de brevet WO 2005/091474 (voir notamment les figures 1A et 2A) un stator de machine électrique tournante polyphasée comportant un bobinage ondulé formant, de part et d'autre d'un corps de stator, des chignons de bobinage. La fabrication du bobinage comprend une étape d'insertion phase par phase des fils de bobinage dans des encoches du corps de stator, puis une étape de mise en forme des chignons par compactage des fils des chignons afin d'obtenir des chignons de forme et dimensions souhaitées. Lors de l'étape d'insertion phase par phase des fils, toutes les spires d'une phase sont insérées dans les encoches appropriées avant d'insérer les spires de la phase suivante. Il s'ensuit un chevauchement encombrant des fils dans les chignons. Par conséquent, pour augmenter le taux de remplissage du stator, à savoir le rapport entre la section transversale du cuivre des fils dans les encoches et la section transversale de celles-ci, il est difficile, voire impossible, d'augmenter encore la section des fils car les chignons seraient excessivement volumineux pour pouvoir être correctement mis en forme, notamment compactés.

Certains types de bobinage permettent de mieux gérer l'encombrement des chignons.

En outre il est souvent souhaitable d'avoir les entrées et sorties de phases du bobinage à des emplacements prédéterminés du stator, en fonction de l'environnement de la machine.

Les documents US 5508571 A, FR 2780828 A, WO 2004/008610 A et US 3984715 A décrivent d'autres stators comprenant chacun un organe de guidage au sommet d'un chignon de stator. Ces organes de guidage guidant les extrémités de fils formant les entrées et/ou sorties de phase de bobinage statorique.

L'invention vise notamment à proposer un nouveau stator de machine électrique tournante, qui permet un plus grand choix de bobinage et de disposer les entrées et sorties de phases à des emplacements souhaités.

L'invention a ainsi pour objet, selon l'un de ses aspects, un stator de machine électrique tournante polyphasée, notamment un alternateur, comportant :
- un corps de stator comportant une pluralité d'encoches, et notamment comprenant un paquet de tôles,
- un bobinage comportant une pluralité de fils insérés dans les encoches du corps de stator et définissant une pluralité de phases, les fils formant des chignons de part et d'autre du corps de stator, chaque chignon présentant un sommet de forme sensiblement annulaire, le bobinage comportant au moins une entrée et une sortie électriques associées à l'une des phases du bobinage,
- un organe de guidage de forme circulaire disposé sur l'un des chignons guidant l'un au moins des fils du bobinage, logeant sur une portion de longueur de celui-ci, le long d'une portion de circonférence du sommet du chignon, et dans lequel l' organe de guidage étant avantageusement agencé pour maintenir une portion d'extrémité de ce fil, laquelle portion d'extrémité de fil forme l'une de l'entrée et la sortie de l'une des phases du bobinage, l'organe de guidage comportant une couronne supérieure et une couronne inférieure se raccordant à la couronne supérieure par une parois sensiblement tronconique divergeant en direction du chignon du bobinage de stator.

Grâce à l'invention, il est possible de disposer les entrées et sorties de phases du bobinage à des emplacements souhaités du stator, adaptés à l'environnement de la machine électrique, par exemple pour tenir compte de la position d'un redresseur de courant, position qui peut varier d'une gamme de machines à une autre.

Le positionnement des entrées et sorties est réalisé grâce à l'organe de guidage en faisant courir les fils, sur une portion de leur longueur, le long d'une portion de circonférence du sommet du chignon, pour les amener à des emplacements souhaités.

Il est possible de prévoir de manière flexible pour chaque gamme de machines un type d'organe de guidage adéquat.

L'invention est particulièrement avantageuse lorsque le type de bobinage retenu impose de commencer de bobiner à un emplacement particulier du corps de stator et de terminer à un autre endroit particulier du corps de stator.

Avantageusement l'organe de guidage présente une forme annulaire, fendue ou non.

Cet organe de guidage peut par exemple s'étendre sur tout le pourtour du chignon.

L'organe de guidage peut être agencé pour former un déflecteur pour orienter un flux d'air de refroidissement s'écoulant au sein de la machine.

De préférence, l'organe de guidage comporte au moins une encoche dans laquelle passe ladite portion d'extrémité de fil formant l'une de l'entrée et la sortie de phase.

Cette encoche peut présenter une forme choisie pour maintenir la portion d'extrémité de fil. Cette forme correspond par exemple sensiblement à un L ou un S permettant d'introduire dans l'encoche la portion d'extrémité de fil avant de la loger dans le fond de l'encoche pour l'immobiliser.

La portion d'extrémité de fil est avantageusement sensiblement parallèle à un axe longitudinal du corps de stator.

Dans un exemple de mise en oeuvre de l'invention, l'organe de guidage comporte un nombre d'encoches égal au nombre de phases du bobinage, ces encoches étant réparties sur le pourtour de l'organe de guidage.

Par exemple l'organe de guidage comporte six encoches pour un bobinage hexaphasé.

En variante, l'organe de guidage comporte un nombre d'encoches supérieur au nombre de phases du bobinage, ces encoches étant réparties sur le pourtour de l'organe de guidage.

Le surnombre d'encoches permet d'avoir un organe de guidage adapté à plusieurs types de machine avec différentes orientations et dispositions des phases.

Ainsi, en fonction du type de machine, certaines encoches sont laissées libres.

De préférence, l'organe de guidage comporte une face étagée s'étendant au moins sur une portion de sa circonférence et s'appliquant sur les fils du bobinage qui longent le sommet du chignon.

Cette face étagée comporte avantageusement au moins une encoche pour recevoir une portion d'extrémité de fil.

La forme étagée permet de recevoir correctement les portions de fils qui courent le long du chignon, l'épaisseur de ces fils variant en fonction de leur nombre.

En variante, l'organe de guidage comporte une face plane s'appliquant sur les fils du bobinage qui longent le sommet du chignon, à la place de la face étagée précitée.

Le cas échéant, l'organe de guidage comporte une face intérieure sensiblement plane et en appui sur le sommet dudit chignon.

La face intérieure sensiblement plane peut présenter une largeur, mesurée suivant un rayon du stator, qui varie lorsque l'on se déplace sur une circonférence de l'organe de guidage, de manière à s'adapter au nombre de fils se chevauchant localement dans le sens radial.

Avantageusement l'organe de guidage comporte une face extérieure, notamment annulaire, sensiblement plane.

Dans un exemple d'organe de guidage comporte un rebord, notamment sensiblement cylindrique, agencé pour s'appliquer sur un côté radialement intérieur dudit chignon, notamment pour mieux placer l'organe de guidage sur le chignon et obtenir, le cas échéant, une meilleure répartition d'un vernis déposé sur les chignons.

En variante, l'organe de guidage comporte au moins une patte agencée pour s'appliquer sur un côté radialement intérieur ou extérieur dudit chignon, cette patte pouvant notamment être agencée pour s'encliqueter sur une base du chignon.

L'organe de guidage peut comporter une couronne supérieure, continue ou en variante discontinue, et une couronne inférieure, continue ou en variante discontinue, se raccordant à la couronne supérieure, et la couronne inférieure est éloignée du sommet du chignon du bobinage de stator après montage de l'organe de guidage sur le stator.

Ceci permet de créer un passage d'air de refroidissement entre le sommet du chignon et l'organe de guidage.

La hauteur des pattes de l'organe de guidage venant se fixer à la base du chignon est choisie de manière à ce que la couronne inférieure soit éloignée axialement du sommet du chignon.

La couronne inférieure se raccorde à la couronne supérieure par une paroi sensiblement tronconique, continue ou en variante discontinue, divergeant en direction du chignon du bobinage de stator.

Ceci permet de concentrer le flux d'air de refroidissement vers le chignon et orienter ce flux légèrement en biais de manière à améliorer le refroidissement du chignon.

Le cas échéant, la couronne supérieure de l'organe de guidage peut venir en contact avec une surface intérieure du palier.

De préférence, l'organe de guidage est réalisé d'un seul tenant, par exemple par moulage d'une matière plastique.

L'organe de guidage peut être réalisé entièrement en plastique et être dépourvu de cuivre, matériau qui est relativement coûteux.

Dans un exemple de mise en oeuvre de l'invention, le bobinage comporte au moins deux fils longeant, sur une portion de leur longueur, le sommet du chignon, et les portions d'extrémité respectives de ces fils sont espacées l'une de l'autre par un angle non nul, notamment supérieur à 10° ou 15°, en fonction de l'environnement de la machine qui peut imposer des angles particuliers entre les entrées et sorties de phases du bobinage.

Avantageusement le bobinage comporte, suivant un rayon du stator, une pluralité de couches de fils dans chacune des encoches, et le bobinage comporte une nappe d'une pluralité de fils espacés les uns des autres d'un pas égal au pas des encoches du corps de stator, les fils de la nappe étant sensiblement parallèles entre eux le long de leur longueur et occupant la couche de fils de même rang lorsque les fils de la nappe passent dans un ensemble d'encoches successives.

L'organe de guidage peut être réalisé avantageusement en cuivre ou tout autre matériau bon conducteur thermique.

L'invention a également pour objet un procédé de fabrication d'un stator de machine électrique tournante, notamment d'un alternateur, le stator comprenant un corps de stator présentant un axe longitudinal et pourvu d'encoches, le stator comprenant en outre un bobinage comportant une pluralité de fils insérés dans les encoches du corps de stator, le procédé comportant les étapes suivantes :
- former le bobinage en insérant les fils dans les encoches du corps de stator, les fils débordant de part et d'autre du corps de stator en formant des chignons, chaque chignon présentant un sommet de forme sensiblement annulaire,
- former l'une d'une entrée et une sortie électrique d'une phase du bobinage en donnant à l'un des fils du bobinage une forme choisie en utilisant un organe de guidage de forme circulaire disposé sur le chignon pour guider le fil de manière à ce que ce fil longe sensiblement, sur une portion de sa longueur, le long d'une portion de circonférence du sommet de l'un des chignons, et en maintenant avec l'organe de guidage une portion d'extrémité de ce fil pour former l'une de l'entrée et la sortie de l'une des phases du bobinage, l'organe de guidage comportant une couronne supérieure et une couronne inférieure se raccordant à la couronne supérieure par une paroi sensiblement tronconique divergeant du chignon du bobinage de stator.

De préférence le bobinage comporte une pluralité de phases et le procédé comporte l'étape suivante :
- former le bobinage en enroulant sur le corps de stator une nappe de fils, chaque fil étant associé à une phase différente du bobinage, tout en guidant les fils de la nappe de manière parallèle dans un ensemble d'encoches successives.

Ce type de bobinage permet d'avoir des chignons compacts avec des fils rangés de manière satisfaisante.

Si on le souhaite, le bobinage peut comporter une nappe comprenant au moins deux fils associés à chaque même phase.

Par exemple, pour un bobinage hexaphasé dit 'deux fils en main', le bobinage est fabriqué en bobinant une nappe de 12 fils.

Pour un bobinage hexaphasé dit 'un fil en main', le bobinage est fabriqué en enroulant une nappe de 6 fils.

Pour un bobinage triphasé dit 'deux fils en main', le bobinage est fabriqué en bobinant une nappe de 6 fils.

Pour un bobinage triphasé dit 'un fils en main', le bobinage est fabriqué en bobinant une nappe de 3 fils.

Pour un bobinage triphasé dit 'quatre fils en main', le bobinage est fabriqué en bobinant une nappe de 12 fils.

Pour un bobinage triphasé dit 'trois fils en main', le bobinage est fabriqué en bobinant une nappe de 9 fils.

L'invention a encore pour objet une machine électrique tournante, notamment un alternateur de véhicule automobile, comportant un stator tel que précité.

L'invention pourra être mieux comprise à la lecture de la description détaillée qui va suivre, d'exemples de mise en œuvre non limitatifs de l'invention, et à l'examen du dessin annexé, sur lequel :
- la figure 1 représente, schématiquement et partiellement, en coupe longitudinale, un exemple d'alternateur,
- la figure 2 illustre, schématiquement et partiellement, un exemple de stator pour équiper l'alternateur de la figure 1,
- la figure 3 représente, schématiquement et partiellement, le stator de la figure 2, sans l'organe de guidage,
- la figure 4 représente, schématiquement et partiellement, en perspective, l'organe de guidage du stator de la figure 2,
- la figure 5 représente, schématiquement et partiellement, en vue de dessous, l'organe de guidage de la figure 4,
- la figure 6 représente, schématiquement et partiellement, l'organe de guidage de la figure 5, en coupe suivant VI-VI,
- la figure 7 est une vue, schématique et partielle, en coupe suivant VII-VII, de l'organe de guidage de la figure 5,
- les figures 8 à 12 représentent, schématiquement et partiellement, un exemple d'organe de guidage,
- les figures 13 et 14 représentent, schématiquement et partiellement, un organe de guidage conforme encore à l'exemple de mise en œuvre de l'invention.

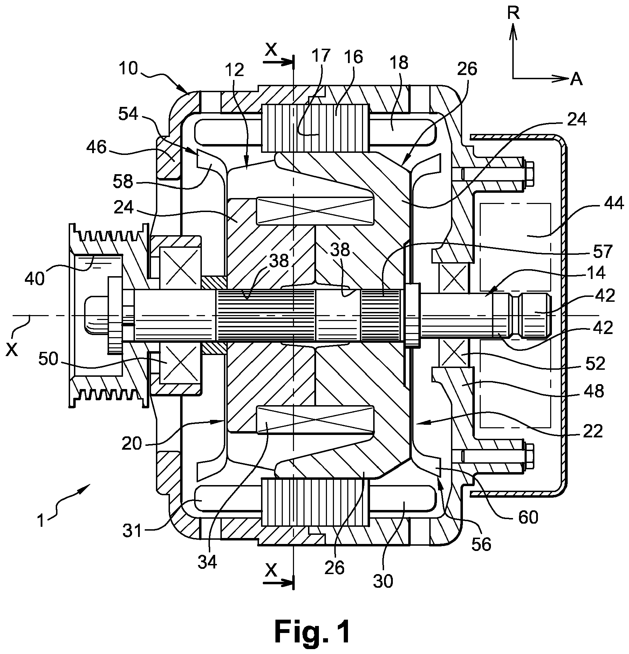

Dans la suite de la description, les flèches "A" et "R" de la figure 1 indiquent respectivement des directions axiale et radiale.

On a représenté sur la figure 1 une machine électrique tournante polyphasée 1 formant, dans le présent exemple d'alternateur pour véhicule automobile.

Bien entendu, la machine électrique 1 peut, si on le souhaite, être réversible et former un alterno-démarreur pouvant fonctionner en mode moteur électrique pour démarrer le moteur à combustion du véhicule et en mode alternateur pour produire de l'énergie électrique.

Cette machine 1 comporte un carter 10 et, à l'intérieur de celui-ci, un rotor 12 solidaire en rotation d'un arbre rotatif 14 d'axe X, appelé arbre de rotor, et un stator 16 qui entoure le rotor 12.

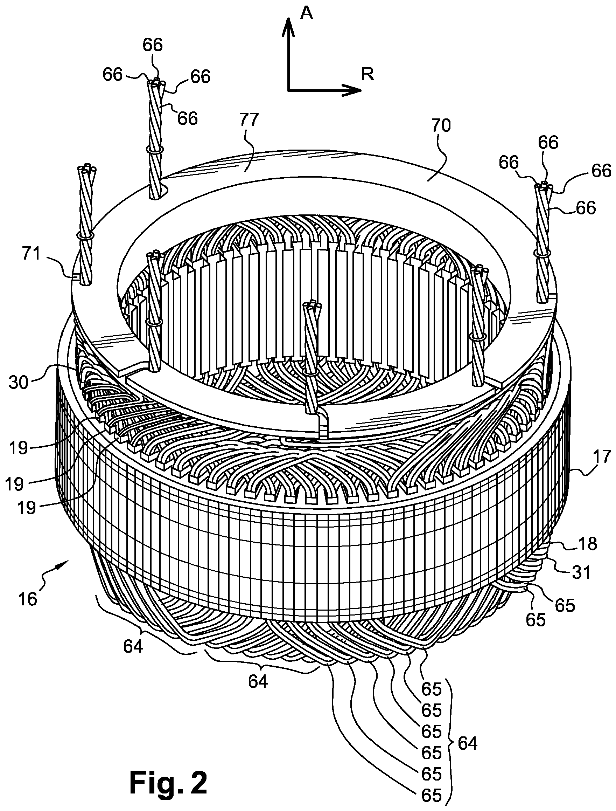

Le stator 16 comporte un corps 17 formé d'un paquet de tôles doté d'encoches 19 pour le montage d'un bobinage de stator 18 formant des chignons 30 et 31 de part et d'autre du corps de stator 17, comme on peut le voir notamment sur la figure 2.

Le rotor 12 comprend deux roues polaires 20 et 22, pourvues chacune d'un flasque transversal 24 sur la périphérie duquel se raccordent une pluralité de griffes 26 s'étendant sensiblement suivant la direction axiale A.

Les griffes 26 d'une roue polaire forment avec les griffes 26 de l'autre roue polaire des espaces interpolaires agencés pour recevoir chacun une structure à aimant, non représentée.

Un bobinage d'excitation 34 est mis en place entre les flasques 24 des roues polaires 20 et 22.

Chaque roue polaire 20 ; 22 comporte un alésage formant un passage intérieur 38 pour recevoir l'arbre 14.

Les roues polaires 20 et 22 sont réalisées par exemple en acier.

L'arbre 14 porte à son extrémité avant une poulie 40 appartenant à un dispositif de transmission de mouvement par l'intermédiaire d'au moins une courroie (non représentée) entre l'alternateur 1 et le moteur à combustion du véhicule automobile, et à son extrémité arrière des bagues collectrices 42 reliées par des liaisons filaires (non représentées) au bobinage d'excitation 34 du rotor 12.

Des balais d'un porte-balais 44 représenté de manière très schématique sont disposés de façon à frotter sur les bagues collectrices 42, afin d'alimenter le bobinage 34 en courant électrique.

Lorsque l'arbre 14 est en rotation et le bobinage d'excitation 34 activé par une alimentation électrique, le rotor inducteur 12 crée un courant induit alternatif dans le stator 16.

Le carter 10 comporte, dans l'exemple considéré, deux parties, à savoir un palier avant 46 et un palier arrière 48 portant le porte-balais 44.

Les paliers 46 et 48 portent chacun un roulement à billes respectivement 50 et 52 pour le montage à rotation de l'arbre 14.

L'alternateur 1 comporte également des moyens pour son refroidissement.

Par exemple, comme illustré à la figure 1, les paliers 46 et 48 sont ajourés pour permettre le refroidissement de l'alternateur par circulation d'air.

Le rotor 12 porte, dans l'exemple décrit, au moins à l'une de ses extrémités axiales un ventilateur destiné à assurer une circulation de l'air. Un premier élément de ventilation 54 est par exemple prévu sur la face transversale avant du rotor 12 et un deuxième élément de ventilation 56 est prévu sur la face arrière du rotor 12. Chaque élément de ventilation 54 et 56 est pourvu d'une pluralité de pales 58 et 60.

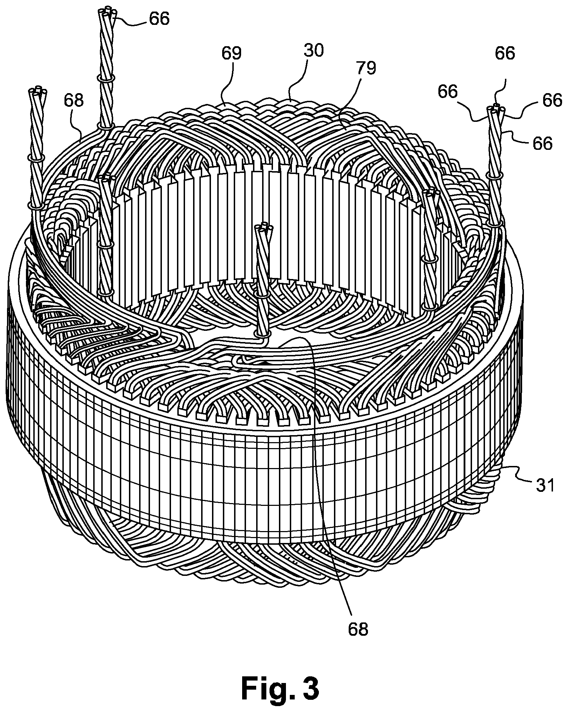

On va maintenant décrire en référence aux figures 2 à 7, plus en détail, le stator 16.

Dans l'exemple décrit, le bobinage 18 du stator 16 est de type hexaphasé et le corps 17 de stator comporte 72 encoches.

Le bobinage 18 comporte, suivant la direction R, une pluralité de couches de fils 65 dans chacune des encoches 19, chaque couche comportant deux fils 65 côte à côte.

Le bobinage 18 est formé en enroulant une nappe 64 de douze fils 65 répartis en six paires de fils correspondant chacune à une phase du bobinage.

Ces paires de fils 65 sont espacées les unes des autres d'un pas égal au pas des encoches 19 du corps de stator 17.

Les fils 65 de chaque paire sont sensiblement accolés et parallèles entre eux le long de leur longueur et occupent la couche de fils de même rang dans les encoches successives 19.

La nappe 64 parcourt la circonférence du corps de stator 17 en formant des ondulations périodiques.

Le bobinage 18 est bobiné sur le corps de stator 17 en tirant simultanément deux fils 'en main', les six phases ensembles ou, en variante, chaque phase successivement tout en respectant l'ordre et la position des phases dans la nappe.

Ce type de bobinage 18 permet d'avoir des chignons 30 et 31 compacts avec des fils rangés de manière satisfaisante.

Chaque fil 65 du bobinage 18 comporte deux portions d'extrémité 66 s'étendant suivant l'axe A, et formant des entrées et sorties de phases du bobinage 18.

Ces portions d'extrémité 66 permettent de connecter le bobinage 18 à un pont redresseur, non représenté, de la machine.

Le bobinage 18 est par exemple de type triangle ou, en variante, de type étoile.

Du fait du type de bobinage 18 obtenu en bobinant les six phases en même temps, ces extrémités 66 de fils 65 font saillie de six encoches successives.

Lorsque cela est nécessaire, il convient de redistribuer ces extrémités 66 de fils à des emplacements souhaités.

Dans l'exemple considéré, les portions d'extrémité 66 sont regroupées par groupe de quatre, ces groupes étant espacés deux à deux d'un angle de 45°.

Chaque fil 65 longe, sur une portion 68 de sa longueur, le sommet annulaire 69 du chignon 30 avant de former les portions d'extrémité 66.

Afin de tirer les fils 65 pour les faire longer le sommet annulaire 69 du chignon 30, un organe de guidage 70 est disposé sur ce sommet 69, comme on peut le voir notamment sur la figure 2.

Cet organe de guidage 70 est posé sur le sommet 69 une fois le chignon 30 formé, et avant de tirer les fils 65 sous cet organe de guidage 70.

L'organe de guidage 70 présente une forme annulaire, de pourtour circulaire.

Cet organe de guidage 70 s'étend sur tout le pourtour du sommet 69 du chignon 30.

Comme illustré notamment sur les figures 2, 4 et 5, l'organe de guidage 70 comporte une pluralité d'encoches 71 dans chacune desquelles passe un groupe de portions d'extrémité de fil 66 formant les entrées et sorties de phase.

Chaque encoche 71 présente une forme choisie pour maintenir le groupe de fils 66.

Cette forme correspond, dans le présent exemple, sensiblement à un L permettant d'introduire dans l'encoche 71 les portions d'extrémité de fil 66 avant de les loger dans le fond 72 de l'encoche 71 pour les immobiliser.

L'organe de guidage 70 comporte un nombre d'encoches 71 égal au nombre de phases du bobinage, à savoir six dans l'exemple considéré correspondant aux six phases du bobinage.

Ces encoches 71 sont réparties sur le pourtour de l'organe de guidage 70 avec un angle G entre deux encoches successives.

Cet angle G est égal à 45° dans l'exemple décrit.

Bien entendu, d'autres valeurs d'angle G sont utilisables, en fonction des emplacements souhaités pour les entrées et sorties de phases.

L'angle G peut être choisi égal à 60° par exemple.

L'organe de guidage 70 comporte une face étagée 75 s'étendant sur un secteur de sa circonférence qui contient les six encoches 71, et s'appliquant sur les fils 68 du bobinage qui longent le sommet 69 du chignon 30.

Cette forme étagée permet de recevoir correctement les portions de fils 68 qui courent le long du chignon 30, l'épaisseur cumulée de ces fils variant en fonction de leur nombre.

Par exemple, la profondeur de l'espace libre laissé par la face étagée 75 est plus grande aux emplacements où un nombre relativement grand de fils 68 se chevauchent et cette profondeur est plus faible aux emplacements où un nombre plus faible de fils 68 se chevauchent.

L'organe de guidage 70 comporte une face intérieure 76 sensiblement plane venant en appui sur le sommet 69 du chignon 30.

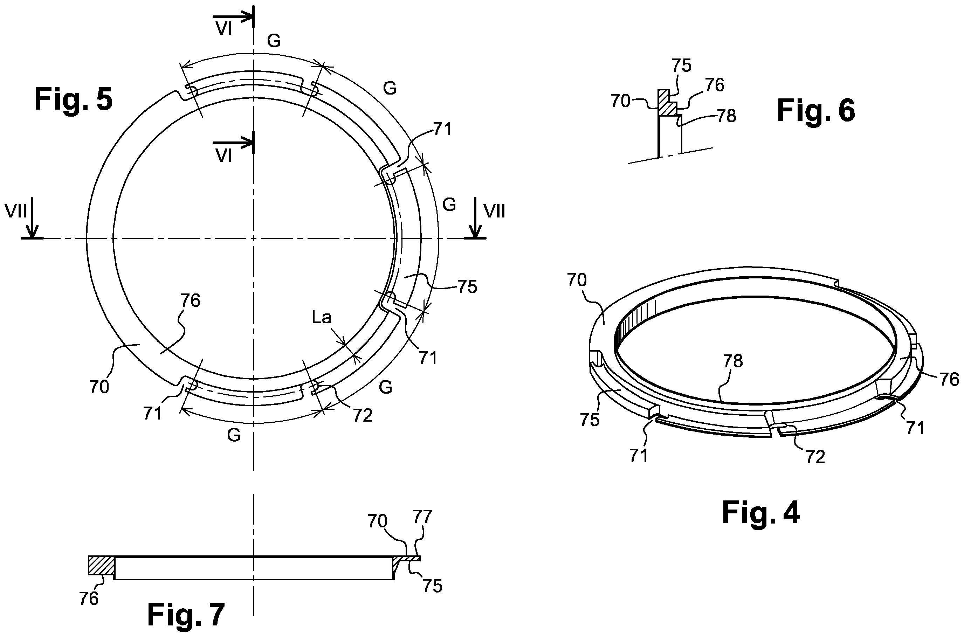

Cette face intérieure 76 sensiblement plane présente une largeur La (voir figure 5), mesurée suivant un rayon du stator, qui varie lorsque l'on se déplace sur une circonférence de l'organe de guidage 70, de manière à ménager un espace adapté pour les portions de fils 68 se chevauchant localement.

L'organe de guidage 70 comporte une face extérieure 77 annulaire sensiblement plane, opposée au chignon 30.

L'organe de guidage 70 comporte en outre un rebord 78 sensiblement cylindrique, agencé pour s'appliquer sur un côté radialement intérieur 79 du chignon 30, notamment pour mieux placer l'organe de guidage 70 sur le chignon 30 et assurer une meilleure répartition d'un vernis déposé sur les chignons, comme illustré sur la figure 6 par exemple.

Dans l'exemple considéré, l'organe de guidage 70 est réalisé d'un seul tenant, notamment par moulage d'une matière plastique telle du polyamide.

Pour améliorer le refroidissement de la machine, la face extérieure 77 de l'organe de guidage est tronconique et peut comporter des ailettes de guidage pour guider un flux d'air.

Bien entendu, l'invention n'est pas limitée aux exemples de mise en œuvre qui viennent d'être décrits.

Par exemple, la forme des encoches 71 peut être différente d'un L. Cette forme de l'encoche peut correspondre par exemple à une forme sensiblement demi- circulaire ou en S.

Le rebord 78 peut présenter une forme autre que cylindrique et être formé par exemple par des picots.

Dans l'exemple décrit plus haut, l'organe de guidage 70 s'étend sur 360°.

En variante, cet organe 70 peut être fendue.

L'organe de guidage peut, si on le souhaite, comporter une ou plusieurs gaines pour isoler une extrémité d'un fil.

L'organe de guidage peut également être utilisée pour d'autres types de bobinage.

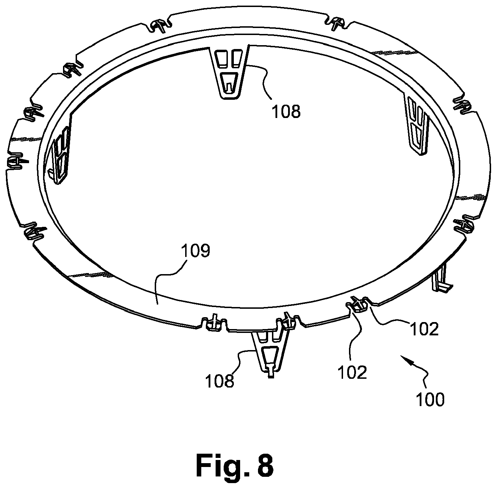

On a représenté sur les figures 8 à 12 un exemple d' organe de guidage 100.

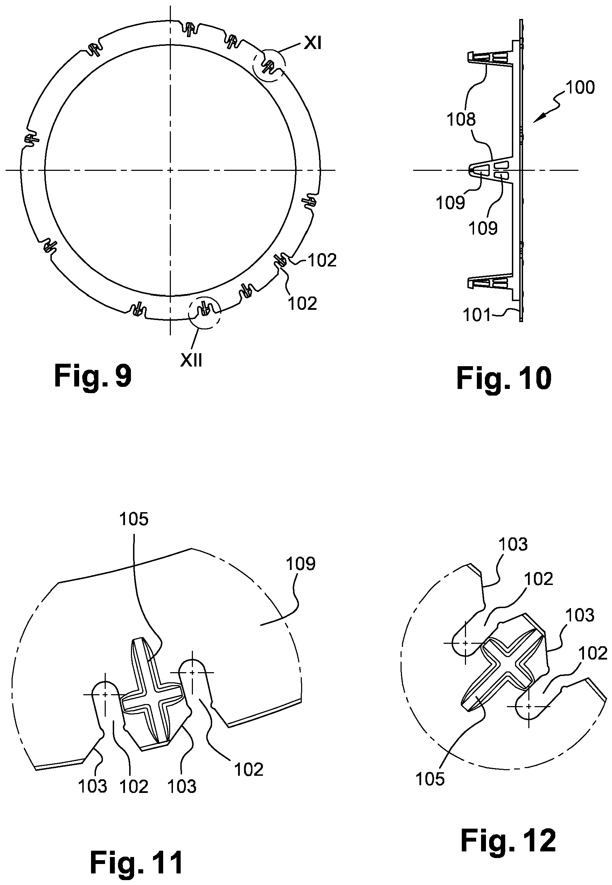

A la différence de l'organe de guidage 70 décrit plus haut, l'organe 100 est dépourvu de face étagée (voir notamment la figure 10).

A la place, l'organe de guidage 70 comporte une face plane 101 s'appliquant sur les fils du bobinage qui longent le sommet 69 du chignon.

Par ailleurs, cet organe de guidage 100 comporte un nombre d'encoches 102 supérieur au nombre de phases du bobinage, ces encoches étant réparties sur le pourtour de l'organe de guidage.

Ces encoches 102 sont rangées par paire et présentent chacune une section évasée 103 vers l'extérieur, pour faciliter l'insertion des fils.

Chaque section évasée 103 est dissymétrique de manière à pouvoir repérer le sens par rapport auquel des fils du bobinage doivent être tirés.

L'organe de guidage 100 comporte en outre entre les deux encoches 102 de chaque paire, sur la face extérieure 109 ou en variante intérieure, des nervures de renforcement 105, par exemple sensiblement en croix.

L'organe de guidage 100 comporte une pluralité de pattes 108 agencées pour s'appliquer sur un côté radialement intérieur 79 du chignon, cette patte 108 étant agencée pour s'encliqueter sur une base du chignon.

En variante, ces pattes peuvent être agencées pour être montées sur le corps de stator ou un palier.

Dans l'exemple décrit, l'organe 100 comporte six pattes 108, toutes de forme sensiblement triangulaire avec des ajours 109.

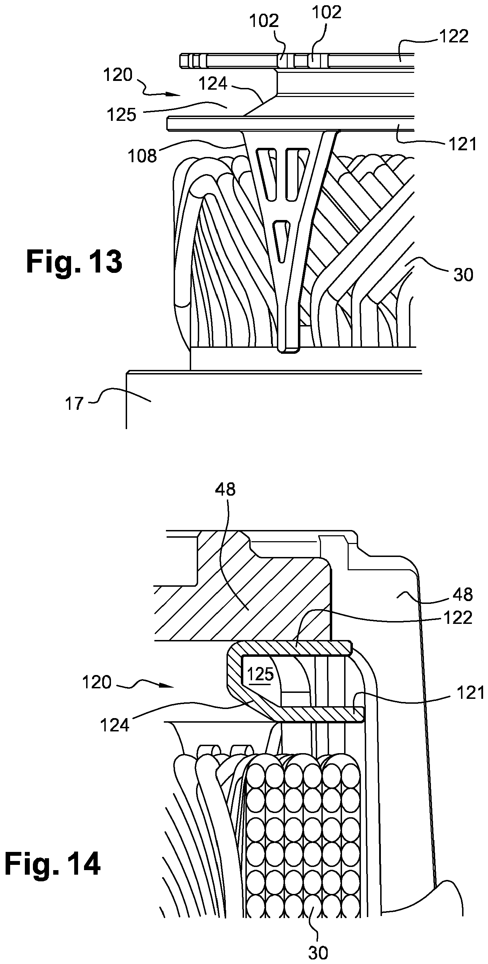

On a représenté sur les figures 13 et 14 un organe de guidage 120 conforme à l'exemple de mise en œuvre de l'invention.

Cet organe de guidage 120, sensiblement analogue à celui 100 décrit plus haut, se distingue de ce dernier par le fait que, à la place d'une unique couronne, l'organe de guidage 120 comprend deux couronnes inférieure 121 et supérieure 122 superposées parallèlement.

Ces couronnes 121 et 122 se raccordent l'une à l'autre par une paroi annulaire 124, radialement intérieure et sensiblement tronconique, formant un chanfrein pour concentrer et orienter le flux d'air de refroidissement pour mieux refroidir le chignon 30.

En coupe transversale, l'organe de guidage 12 présente une forme sensiblement en U avec une gorge annulaire 125 dirigée vers la périphérie extérieure.

Les encoches 102 sont formées sur la couronne supérieure 122.

La hauteur des pattes 108, au nombre de cinq par exemple, de l'organe de guidage 120 venant se fixer à la base du chignon 30 est choisie de manière à ce que la couronne inférieure 121 soit éloignée axialement du sommet du chignon 30.

Dans l'exemple considéré, la couronne supérieure 122 vient en appui sur l'intérieur du palier 48.

## Revendications

1. Stator (16) de machine électrique tournante polyphasée (1), notamment un alternateur, comportant :
- un corps de stator (17) comportant une pluralité d'encoches (19), et notamment comprenant un paquet de tôles,
- un bobinage (18) comportant une pluralité de fils (65) insérés dans les encoches (19) du corps de stator et définissant une pluralité de phases, les fils formant des chignons (30, 31) de part et d'autre du corps de stator (17), chaque chignon (30 ; 31) présentant un sommet (69) de forme sensiblement annulaire, le bobinage (18) comportant au moins une entrée et une sortie électriques associées à l'une des phases du bobinage (18),
**caractérisé en ce qu'**il comporte en outre
un organe de guidage (70 ; 100 ; 120) de forme circulaire disposé sur l'un des chignons (30) guidant l'un au moins des fils du bobinage longeant sur une portion de longueur de celui-ci, le long d'une portion de circonférence du sommet (69) du chignon (30), et dans lequel l'organe de guidage (70 ; 100 ; 120) maintient une portion d'extrémité (66) de ce fil, laquelle portion d'extrémité de fil (66) forme l'une de l'entrée et la sortie de l'une des phases du bobinage, l'organe de guidage (120) comportant une couronne supérieure (122) et une couronne inférieure (121) se raccordant à la couronne supérieure (122) par une paroi sensiblement tronconique (124) divergeant en direction du chignon (30) du bobinage (18) de stator.

2. Stator selon la revendication 1, **caractérisé par le fait que** l'organe de guidage (70 ; 100 ; 120) comporte au moins une encoche (71, 102) dans laquelle passe ladite portion d'extrémité (66) de fil formant l'une de l'entrée et la sortie de phase, cette portion d'extrémité de fil étant notamment sensiblement parallèle à un axe (X) longitudinal du corps de stator (17).

3. Stator selon la revendication 2, **caractérisé par le fait que** l'organe de guidage (70 ; 100 ; 120) comporte un nombre d'encoches (71) égal au nombre de phases du bobinage (18), ces encoches étant réparties sur le pourtour de l'organe de guidage.

4. Stator selon la revendication 2, **caractérisé par le fait que** l'organe de guidage (70 ; 100 ; 120) comporte un nombre d'encoches (102) supérieur au nombre de phases du bobinage (18), ces encoches étant réparties sur le pourtour de l'organe de guidage.

5. Stator selon l'une quelconque des revendications précédentes, **caractérisé par le fait que** l'organe de guidage (70 ; 100 ; 120) comporte une face plane (101) s'appliquant sur les fils (65) du bobinage (18) qui longent le sommet (69) du chignon.

6. Stator selon l'une quelconque des revendications précédentes, **caractérisé par le fait que** l'organe de guidage (70 ; 100 ; 120) comporte au moins une patte (108) agencée pour s'appliquer sur un côté radialement intérieur ou extérieur dudit chignon (30, 31), cette patte pouvant notamment être agencée pour s'encliqueter sur une base du chignon.

7. Stator selon la revendication précédente, **caractérisé par le fait que** la couronne inférieure (121) est éloignée du sommet du chignon (30) du bobinage de stator après montage de l'organe de guidage (120) sur le stator.

8. Stator selon l'une quelconque des revendications précédentes, **caractérisé par le fait que** l'organe de guidage (70, 100, 120) est réalisé d'un seul tenant, notamment par moulage d'une matière plastique.

9. Stator selon l'une quelconque des revendications précédentes, **caractérisé par le fait que** le bobinage (18) comporte au moins deux fils (65) longeant, sur une portion de leur longueur, le sommet (69) du chignon, et **par le fait que** les portions d'extrémité (66) respectives de ces fils sont espacées l'une de l'autre par un angle non nul, notamment supérieur à 10° ou 15°.

10. Stator selon l'une quelconque des revendications précédentes, le bobinage (18) comportant, suivant un rayon du stator, une pluralité de couches de fils dans chacune des encoches (19), **caractérisé par le fait que** le bobinage (18) comporte au moins une nappe (64) d'une pluralité de fils espacés les uns des autres d'un pas égal au pas des encoches (19) du corps de stator, les fils de la nappe étant sensiblement parallèles entre eux le long de leur longueur et occupant la couche de fils d'un même rang de bobinage lorsque les fils de la nappe passent dans un ensemble d'encoches successives.

11. Machine électrique tournante (1), notamment alternateur pour véhicule automobile, comportant un stator (16) tel que défini dans l'une quelconque des revendications précédentes.

12. Procédé de fabrication d'un stator de machine électrique tournante selon l'une quelconque des revendications précédentes, notamment d'un alternateur, le stator (16) comprenant un corps de stator (17) présentant un axe longitudinal et pourvu d'encoches (19), le stator (16) comprenant en outre un bobinage (18) comportant une pluralité de fils (65) insérés dans les encoches (19) du corps de stator, le procédé comportant les étapes suivantes :
- former le bobinage (18) en insérant les fils (65) dans les encoches (19) du corps de stator, les fils débordant de part et d'autre du corps de stator (17) en formant des chignons (30, 31), chaque chignon présentant un sommet (69) de forme sensiblement annulaire,
- former l'une d'une entrée et une sortie électrique d'une phase du bobinage (18) en donnant à l'un des fils du bobinage (18) une forme choisie en utilisant un organe de guidage (70 ; 100 ; 120) de forme circulaire disposé sur le chignon (30, 31) pour guider le fil (65) de manière à ce que ce fil longe sensiblement, sur une portion de sa longueur, le long d'une portion de circonférence du sommet (69) de l'un des chignons (30, 31), et en maintenant avec l'organe de guidage (70 ; 100 ; 120) une portion d'extrémité (66) de ce fil pour former l'une de l'entrée et la sortie de l'une des phases du bobinage (18), l'organe de guidage (120) comportant une couronne supérieure (122) et une couronne inférieure (121) se raccordant à la couronne supérieure (122) par une paroi sensiblement tronconique (124) divergeant en direction du chignon (30) du bobinage (18) de stator.

13. Procédé selon la revendication précédente, le bobinage (18) comportant une pluralité de phases, **caractérisé par le fait qu'**il comporte l'étape suivante :
- former le bobinage (18) en enroulant sur le corps de stator (17) au moins une nappe (64) de fils, chaque fil étant associé à une phase différente du bobinage (18), tout en guidant les fils de la nappe (64) de manière parallèle dans un ensemble d'encoches (19) successives.

## Patentansprüche

1. Stator (16) einer mehrphasigen rotierenden elektrischen Maschine (1), insbesondere einer Lichtmaschine, welcher aufweist:
- einen Statorkörper (17), der eine Vielzahl von Nuten (19) aufweist und insbesondere ein Blechpaket umfasst,
- eine Wicklung (18), die eine Vielzahl von Drähten (65) aufweist, die in die Nuten (19) des Statorkörpers eingefügt sind und eine Vielzahl von Phasen definieren, wobei die Drähte Wickelköpfe (30, 31) beiderseits des Statorkörpers (17) bilden, wobei jeder Wickelkopf (30; 31) einen Scheitel (69) von im Wesentlichen ringförmiger Gestalt aufweist, wobei die Wicklung (18) wenigstens einen elektrischen Eingang und einen elektrischen Ausgang aufweist, die einer der Phasen der Wicklung (18) zugeordnet sind,
**dadurch gekennzeichnet, dass** er außerdem ein an einem der Wickelköpfe (30) angeordnetes kreisförmiges Führungsorgan (70; 100; 120) aufweist, das wenigstens einen der Drähte der Wicklung, der sich entlang eines Längenabschnitts derselben erstreckt, entlang eines Umfangsabschnitts des Scheitels (69) des Wickelkopfes (30) führt, und wobei das Führungsorgan (70; 100; 120) einen Endabschnitt (66) dieses Drahtes hält, wobei dieser Drahtendabschnitt (66) den einen von dem Eingang und dem Ausgang der einen der Phasen der Wicklung bildet,
wobei das Führungsorgan (120) einen oberen Kranz (122) aufweist, und einen unteren Kranz (121), der sich an den oberen Kranz (122) über eine im Wesentlichen kegelstumpfförmige Wand (124) anschließt, die in Richtung des Wickelkopfes (30) der Statorwicklung (18) auseinanderläuft.

2. Stator nach Anspruch 1, **dadurch gekennzeichnet, dass** das Führungsorgan (70; 100; 120) wenigstens eine Nut (71, 102) aufweist, in welcher der Drahtendabschnitt (66) verläuft, der den einen von dem Eingang und dem Ausgang einer Phase bildet, wobei dieser Drahtendabschnitt insbesondere im Wesentlichen parallel zu einer Längsachse (X) des Statorkörpers (17) ist.

3. Stator nach Anspruch 2, **dadurch gekennzeichnet, dass** das Führungsorgan (70; 100; 120) eine Anzahl von Nuten (71) aufweist, die gleich der Anzahl der Phasen der Wicklung (18) ist, wobei diese Nuten auf dem Umfang des Führungsorgans verteilt sind.

4. Stator nach Anspruch 2, **dadurch gekennzeichnet, dass** das Führungsorgan (70; 100; 120) eine Anzahl von Nuten (102) aufweist, die größer als die Anzahl der Phasen der Wicklung (18) ist, wobei diese Nuten auf dem Umfang des Führungsorgans verteilt sind.

5. Stator nach einem der vorhergehenden Ansprüche, **dadurch gekennzeichnet, dass** das Führungsorgan (70; 100; 120) eine ebene Seite (101) aufweist, die an den Drähten (65) der Wicklung (18) anliegt, welche entlang des Scheitels (69) des Wickelkopfes verlaufen.

6. Stator nach einem der vorhergehenden Ansprüche, **dadurch gekennzeichnet, dass** das Führungsorgan (70; 100; 120) wenigstens eine Lasche (108) aufweist, die dafür ausgebildet ist, an einer radial inneren oder äußeren Seite des Wickelkopfes (30, 31) zur Anlage zu kommen, wobei diese Lasche insbesondere dafür ausgebildet sein kann, an einem Unterteil des Wickelkopfes einzurasten.

7. Stator nach dem vorhergehenden Anspruch, **dadurch gekennzeichnet, dass** der untere Kranz (121) nach Anbringung des Führungsorgans (120) am Stator vom Scheitel des Wickelkopfes (30) der Statorwicklung entfernt ist.

8. Stator nach einem der vorhergehenden Ansprüche, **dadurch gekennzeichnet, dass** das Führungsorgan (70; 100; 120) aus einem Stück hergestellt ist, insbesondere durch Formen eines Kunststoffs.

9. Stator nach einem der vorhergehenden Ansprüche, **dadurch gekennzeichnet, dass** die Wicklung (18) wenigstens zwei Drähte (65) aufweist, die sich auf einem Abschnitt ihrer Länge entlang des Scheitels (69) des Wickelkopfes erstrecken, und dadurch, dass die jeweiligen Endabschnitte (66) dieser Drähte voneinander durch einen Winkel beabstandet sind, der von null verschieden und insbesondere größer als 10° oder 15° ist.

10. Stator nach einem der vorhergehenden Ansprüche, wobei die Wicklung (18) entlang eines Radius des Stators eine Vielzahl von Schichten von Drähten in jeder der Nuten (19) aufweist, **dadurch gekennzeichnet, dass** die Wicklung (18) wenigstens eine Lage (64) aus einer Vielzahl von Drähten aufweist, die voneinander um einen Abstand beabstandet sind, der gleich dem Abstand der Nuten (19) des Statorkörpers ist, wobei die Drähte der Lage entlang ihrer Länge im Wesentlichen parallel zueinander sind und die Schicht von Drähten ein und derselben Wicklungsreihe einnehmen, wenn die Drähte der Lage in einer Gesamtheit von aufeinander folgenden Nuten verlaufen.

11. Rotierende elektrische Maschine (1), insbesondere Lichtmaschine für ein Kraftfahrzeug, welche einen Stator (16) aufweist, wie in einem der vorhergehenden Ansprüche definiert.

12. Verfahren zur Herstellung eines Stators einer rotierenden elektrischen Maschine nach einem der vorhergehenden Ansprüche, insbesondere einer Lichtmaschine, wobei der Stator (16) einen Statorkörper (17) umfasst, der eine Längsachse aufweist und mit Nuten (19) versehen ist, wobei der Stator (16) außerdem eine Wicklung (18) umfasst, die eine Vielzahl von Drähten (65) aufweist, die in die Nuten (19) des Statorkörpers eingefügt sind, wobei das Verfahren die folgenden Schritte umfasst:
- Ausbilden der Wicklung (18) durch Einfügen der Drähte (65) in die Nuten (19) des Statorkörpers, wobei die Drähte auf beiden Seiten des Statorkörpers (17) herausragen und dabei Wickelköpfe (30; 31) bilden, wobei jeder Wickelkopf einen Scheitel (69) von im Wesentlichen ringförmiger Gestalt aufweist,
- Ausbilden des einen von einem elektrischen Eingang und einem elektrischen Ausgang einer Phase der Wicklung (18), indem dem einen der Drähte der Wicklung (18) eine Form gegeben wird, die unter Verwendung eines an dem Wickelkopf (30, 31) angeordneten kreisförmigen Führungsorgans (70; 100; 120) gewählt wird, um den Draht (65) derart zu führen, dass sich dieser Draht auf einem Abschnitt seiner Länge im Wesentlichen entlang eines Umfangsabschnitts des Scheitels (69) des einen der Wickelköpfe (30, 31) erstreckt, und indem mit dem Führungsorgan (70; 100; 120) ein Endabschnitt (66) dieses Drahtes gehalten wird, um den einen von dem Eingang und dem Ausgang der einen der Phasen der Wicklung (18) zu bilden, wobei das Führungsorgan (120) einen oberen Kranz (122) aufweist, und einen unteren Kranz (121), der sich an den oberen Kranz (122) über eine im Wesentlichen kegelstumpfförmige Wand (124) anschließt, die in Richtung des Wickelkopfes (30) der Statorwicklung (18) auseinanderläuft.

13. Verfahren nach dem vorhergehenden Anspruch, wobei die Wicklung (18) mehrere Phasen aufweist, **dadurch gekennzeichnet, dass** es den folgenden Schritt umfasst:
- Ausbilden der Wicklung (18) durch Aufwickeln wenigstens einer Lage (64) von Drähten auf den Statorkörper (17), wobei jeder Draht einer anderen Phase der Wicklung (18) zugeordnet ist, bei gleichzeitigem Führen der Drähte der Lage (64) auf parallele Art und Weise in einer Gesamtheit von aufeinander folgenden Nuten (19).

## Claims

1. Stator (16) of a polyphase rotary electric machine (1), in particular an alternator, having:
- a stator body (17) having a plurality of slots (19), and in particular comprising a lamination stack,
- a coil (18) having a plurality of wires (65) that are inserted into the slots (19) in the stator body and define a plurality of phases, the wires forming bundles (30, 31) on either side of the stator body (17), each bundle (30; 31) having a substantially annular top (69), the coil (18) having at least one input and one output that are electrically linked to one of the phases of the coil (18),
**characterized in that** it also has:
a guide member (70; 100; 120) of circular shape disposed on one of the bundles (30), guiding at least one of the wires of the coil, following a portion of the length thereof, along a portion of the circumference of the top (69) of the bundle (30), and wherein the guide member (70; 100; 120) holds an end portion (66) of this wire, said wire end portion (66) forming one of the input and the output of one of the phases of the coil, the guide member (120) having an upper crown (122) and a lower crown (121) that is connected to the upper crown (122) by a substantially frustoconical wall (124) that diverges in the direction of the bundle (30) of the stator coil (18) .

2. Stator according to Claim 1, **characterized in that** the guide member (70; 100; 120) has at least one slot (71, 102) through which said wire end portion (66) forming one of the phase input and the phase output passes, this wire end portion being in particular substantially parallel to a longitudinal axis (X) of the stator body (17).

3. Stator according to Claim 2, **characterized in that** the guide member (70; 100; 120) has a number of slots (71) equal to the number of phases of the coil (18), these slots being distributed around the perimeter of the guide member.

4. Stator according to Claim 2, **characterized in that** the guide member (70; 100; 120) has a number of slots (102) greater than the number of phases of the coil (18), these slots being distributed around the perimeter of the guide member.

5. Stator according to any one of the preceding claims, **characterized in that** the guide member (70; 100; 120) has a flat face (101) resting on the wires (65) of the coil (18) that follow the top (69) of the bundle.

6. Stator according to any one of the preceding claims, **characterized in that** the guide member (70; 100; 120) has at least one tab (100) arranged so as to rest on a radially inner or outer side of said bundle (30, 31), said tab being able in particular to be arranged so as to clip onto a base of the bundle.

7. Stator according to the preceding claim, **characterized in that** the lower crown (121) is at a distance from the top of the bundle (30) of the stator coil after the guide member (120) has been mounted on the stator.

8. Stator according to any one of the preceding claims, **characterized in that** the guide member (70, 100, 120) is made in one piece, in particular by moulding a plastics material.

9. Stator according to any one of the preceding claims, **characterized in that** the coil (18) has at least two wires (65) that follow, along a portion of their length, the top (69) of the bundle, and **in that** the respective end portions (66) of these wires are spaced apart from one another by a non-zero angle, in particular an angle greater than 10° or 15°.

10. Stator according to any one of the preceding claims, the coil (18) having, along a radius of the stator, a plurality of layers of wires in each of the slots (19), **characterized in that** the coil (18) has at least one ply (64) of a plurality of wires that are spaced apart from one another at a spacing that is or is not equal to the spacing of the slots (19) in the stator body, the wires of the ply being substantially parallel to one another along their length and occupying the layer of wires in one of the same coil rank when the wires of the ply pass into a set of successive slots.

11. Rotary electric machine (1), in particular alternator for a motor vehicle, having a stator (16) as defined in any one of the preceding claims.

12. Method for manufacturing a stator of a rotary electric machine according to any one of the preceding claims, in particular of an alternator, the stator (16) comprising a stator body (17) that has a longitudinal axis and is provided with slots (19), the stator (16) also comprising a coil (18) having a plurality of wires (65) inserted into the slots (19) in the stator body, the method having the following steps of:
- forming the coil (18) by inserting the wires (65) into the slots (19) in the stator body, the wires protruding from either side of the stator body (17), forming bundles (30, 31), each bundle having a substantially annular top (69),
- forming one of an electrical input and an electrical output of a phase of the coil (18) by giving one of the wires of the coil (18) a chosen shape by using a guide member (70; 100; 120) of circular shape disposed on the bundle (30, 31) in order to guide the wire (65) such that this wire substantially follows, along a portion of its length, a portion of the circumference of the top (69) of one of the bundles (30, 31), and by holding an end portion (66) of this wire with the guide member (70; 100; 120) in order to form one of the input and output of one of the phases of the coil (18), the guide member (120) having an upper crown (122) and a lower crown (121) that is connected to the upper crown (122) by a substantially frustoconical wall (124) that diverges in the direction of the bundle (30) of the stator coil (18).

13. Method according to the preceding claim, the coil (18) having a plurality phases, **characterized in that** it has the following step of:
- forming the coil (18) by winding onto the stator body (17) at least one ply (64) of wires, each wire being linked to a different phase of the coil (18), while guiding the wires of the ply (64) in parallel through a set of successive slots (19).
